Europäisches Patentamt

European Patent Office

Office européen des brevets

(19)

(11) Veröffentlichungsnummer: **0 040 664**
**B1**

(12) EUROPÄISCHE PATENTSCHRIFT

(45) Veröffentlichungstag der Patentschrift: **28.08.85**

(21) Anmeldenummer: **81100491.0**

(22) Anmeldetag: **23.01.81**

(51) Int. Cl.⁴: **C 09 D 3/14, B 41 M 5/24**

(54) **Verfahren zum Herstellen eines mit Füllstoffen und/oder Pigmenten versehenen Lackpräparats für Aufzeichnungsträger und aus diesem Präparat hergestellter Lack.**

(30) Priorität: **22.05.80 DE 3019574**

(43) Veröffentlichungstag der Anmeldung:
**02.12.81 Patentblatt 81/48**

(45) Bekanntmachung des Hinweises auf die Patenterteilung:
**28.08.85 Patentblatt 85/35**

(84) Benannte Vertragsstaaten:
**DE FR GB IT**

(56) Entgegenhaltungen:
**DE-B-1 115 868**
**GB-A-2 026 346**
**US-A-2 186 454**

(73) Patentinhaber: **International Business Machines Corporation**
**Old Orchard Road**
**Armonk, N.Y. 10504 (US)**

(72) Erfinder: **Bahr, Dietrich Jürgen, Dr.**
**Rheinstrasse 49**
**D-7033 Herrenberg (DE)**
Erfinder: **Briska, Marian**
**Nürtinger Strasse 51**
**D-7030 Böblingen (DE)**

(74) Vertreter: **Oechssler, Dietrich, Dr. rer. nat.**
**Schönaicher Strasse 220**
**D-7030 Böblingen (DE)**

Courier Press, Leamington Spa, England.

EP 0 040 664 B1

## Beschreibung

Die Erfindung betrifft ein Verfahren zum Herstellen eines mit Füllstoffen und/oder Pigmenten versehenen Lackpräparats für Aufzeichnungsträger auf der Basis von Celluloseaceto-Monobutyrat und Polyvinylester und einen stabilen, temperaturbeständigen, aus diesem Lackpräparat hergestellten Lack.

Derartige auf der Basis von Acetylcellulose-Monobutyrat aufgebaute Lacke für Aufzeichnungsträger, die aus einer Trägerschicht, beispielsweise aus Papier, einer Lackschicht und einer darüber liegenden, aus Aluminium bestehenden oder aluminium-haltigen metallischen Deckschicht bestehen, haben für die Verwendung bei der Beschichtung von Aufzeichnungsträgern bei mittlerem bis hohem Molekulargewicht einige sehr positive Eigenschaften. Sie gehören zu den temperaturbeständigsten Cellulosen, ihre Schmelz- und Zersetzungstemperatur fallen praktisch zusammen, so daß der Lack in dem erforderlichen Temperaturbereich noch elastisch bleibt und die Pigmente dabei festhält, d.h. kein Auskreiden zeigt. Diese Lacke haben außerdem eine niedrige Ölzahl, d.h. sie können mit relativ geringer Füllmittel-Feststoffzugabe mattiert werden. Ferner sind diese Lacke relativ hart und damit fast vergleichbar mit Nitro-cellulose, so daß sie durch auf·ihrer Oberfläche gleitende Elektroden nur in geringem Maß mechanisch angegriffen werden. Ferner haben die Lackpräparate, aus denen diese Lacke hergestellt werden, prinzipiell eine geringe Lösungsmittelretention, was sowohl technisch als auch wirtschaftlich von großer Bedeutung ist. Bei zu hoher Lösungsmittelretention sind die Polymere wegen zu langer Trocknungszeiten ungeeignet.

Unglücklicherweise hat das Cellulose-Monobutyrat einige schwerwiegende Nachteile, die es für die vorgesehene Anwendung zunächst unbrauchbar machen. Das Cellulose-Monobutyrat ist nämlich bei den für die Temperaturbeständigkeit erforderlichen hohen Molekulargewichten relativ hochpolar, d.h. seine Rußverträglichkeit ist sehr schlecht, was einem Lackfilm seine innere Stabilität nimmt. Bei ausreichend hoher Rußbeigabe wird die Kohäsion des Lackes sehr stark reduziert, der Lack bröckelt. Außerdem schrumpft das zugrunde liegende Lackpräparat beim Trocknen sehr stark ein, was seine Haftung am Papier verringert. Die außerordentlich geringe Lösungsmittelretention läßt das Lackpräparat an der Oberfläche bereits in der Druckpresse soweit trocknen, daß das Lackpräparat kaum in das Papier eindringen kann und somit schlecht an dem Papier haftet.

Grundsätzlich werden allen Lackpräparaten für die Aufzeichnungsträger-Herstellung Weichmacher beigemischt, um das Schrumpfen bei der Aushärtung zu reduzieren, um die Polarität zu verringern und die allgemeine Verarbeitbarkeit zu verbessern. Leider verursachen Weichmacher, die eine physikalische Wirkung haben, eine allgemeine Schmelzpunkterniedrigung.

Aus der US—A—2 186 454 sind Lacke bekannt, welche als wetterbeständige und farbechte Schutzüberzüge für Metalle Verwendung finden und welche Gemische aus Celluloseaceto-Butyraten und Polyvinylestern, wie Polyvinylacetaten, enthalten. Diese Lacke enthalten außerdem üblicherweise Weichmacher.

Die der Erfindung zugrunde liegende Aufgabe besteht nun darin, einen Weg zu finden, wie man bei auf der Basis von Cellulose-aceto-Monobutyrat und Polyvinylester aufgebauten Lackpräparaten, bzw. bei den aus diesen Lackpräparaten hergestellten Lacken, die oben erwähnten guten Eigenschaften beibehalten kann, ohne dabei die ebenfalls erwähnten schlechten Eigenschaften in Kauf nehmen zu müssen. Es wurde daher der Versuch unternommen, ob man nicht die Cellulose-Monobutyrate chemisch in ihrer Polarität verändern kann, d.h. eine Art chemische Weichmachung durchzuführen, gleichzeitig aber ihre physikalischen Eigenschaften, wie etwa die Temperaturbeständigkeit oder die mechanische Stabilität beizubehalten.

Diese der Erfindung zugrunde liegende Aufgabe wird mit einem Verfahren der eingangs genannten Art mit den Merkmalen des kennzeichnenden Teils des Patentanspruchs 1 und mit einem Lack gemäß Patentanspruch 6 gelöst.

Insbesondere ist es vorteilhaft, wenn man als Copolymerisat mit etwa 20 Gewichtsprozent Polyvinyl-Laurylester copolymerisiertes Polyvinylacetat verwendet.

Dabei geht man bevorzugt so vor, daß man beide Ausgangsstoffe als 12%ige Lösung in Äthylacetat mit einigen Prozent Butylacetat ansetzt, diese Lösungen miteinander vermischt und dann Füllstoffe und/oder Pigmente dieser Lösung beimischt. Um optimale Ergebnisse zu erhalten, sollte bei einem Molekulargewicht des PVA-Copolymerisats von etwa 100 000 das Mischungsverhältnis 72% Celluloseaceto-Monobutyrat zu 28% PVA-Copolymerisat betragen.

Dieser Lösungsmischung werden dann etwa 2% bis etwa 4% Ruß und etwa 4% bis 5% Calciumcarbonat beigemischt.

Der aus dem erfindungsgemäßen Lackpräparat erzeugte Lack hat selbst bei diesem hohen Füllgrad und sehr hoher Mattigkeit eine ausgezeichnete Haftung auf dem Papier, hohe Elastizität und eine sehr gute Härte. Die ursprüngliche Schrumpfung des Monobutyrats ist nahezu verschwunden. Trotz des relativ niedrigen Molekulargewichts der Polyvinylacetat-Komponente von nur etwa 90 000 und dem hohen Mischungsanteil von fast 30% wird keine Verminderung der Schmelztemperatur gegenüber einem mit herkömmlichen Weichmachern behandelten Monobutyrat festgestellt.

Dies ist vermutlich darauf zurückzuführen, daß die langen Seitenzweige des Polyvinylesters eine räumliche Sperrwirkung ausüben. In der Tat wird bei hoher Copolymerzugabe (wie z. B. etwa 50%) bereits eine physikalische Weichmachung beobachtet, und das Produkt wird bei Temperaturen von 180°C bis 200°C bereits weich, d. h. es verhält sich infolge des Copolymerüberschusses als echtes Gemisch. Liegt der Anteil an Copolymerem unterhalb von 20%, dann wird kaum eine Beeinflussung der Hafteigenschaften des Monobutyrats auf einem Papier festgestellt. Bei dem oben angegebenen Gemisch von 72% zu 28% erhöht sich wesentlich die Aufnahmefähigkeit für Ruß, gleichzeitig vermindert sich die Aufnahmefähigkeit für polare Pigmente, wie z. B. Calciumcarbonat. Beide Aufnahmefähigkeiten sind jedoch für die beabsichtigte Verwendung ausreichend, so daß man insgesamt Lacke mit hoher Gesamtmattigkeit erhält, bei immer noch sehr guter Kohäsion des Lackfilms. Diese Bedingungen müssen unbedingt erfüllt werden. Dies ist jedoch bei nahezu allen reinen Polymeren ein Widerspruch in sich selbst. Eine hohe Mattigkeit ist nur dadurch zu erreichen, daß der Lack an seine Grenze der Füllstoffaufnahme gebracht wird. Eine Verwandtschaft der Polarität der Füllstoffe mit den Polymeren ist eine wichtige Voraussetzung für die innere Kohäsion eines bis an die Grenze gefüllten Lacks. Ist irgendeine Abstoßung dem Polymer und den Füllstoffen vorhanden, verliert der Lack sofort seine mechanische Festigkeit, d. h. er kreidet aus.

Es wäre noch vorteilhafter, wenn man ein PVA-Copolymerisat verwenden würde, dessen Molekulargewicht bei etwa 500 000 liegt, und damit mit dem Molekulargewicht des Monobutyrates vergleichbar ist.

Zusammenfassend kann also gesagt werden, daß eine der wesentlichen Wirkungen dieser Mischung aus Monobutyrat und Copolymerisat darin zu sehen ist, daß die Mischung für die Aufnahme von polaren und unpolaren Pigmenten und Füllstoffen gleichzeitig geeignet ist. Dies war nach allen bisher bekannten Untersuchungen nicht zu erwarten.

## Patentansprüche

1. Verfahren zum Herstellen eines mit Füllstoffen und/oder Pigmenten versehenen Lackpräparats für Aufzeichnungsträger auf der Basis von Celluloseaceto-Monobutyrat und Polyvinylester, dadurch gekennzeichnet, das außer dem Celluloseaceto-Monobutyrat als Ausgangsstoff ein Polyvinylester-Copolymerisat verwendet wird, dessen aus längeren aliphatischen Ketten bestehende Seitenzweige eine Mindestlänge von 8 Kohlenstoffatomen aufweisen, wobei diese Seitenzweige des Copolymers an der Hauptkette im Abstand von mehr als 6 Kohlenstoffatomen verestert sind, daß — in an sich bekannter Weise — die Ausgangsstoffe je für sich in einem üblichen organischen Lösungsmittel gelöst werden, die Lösungen dann in solchen Mengen miteinander vermischt werden, daß die Mischung bezogen auf die Summe der beiden Ausgansstoffe 65 bis 90 Gew.% des Butyrats und 10 bis 35 Gew.% des Polyvinylester-Copolymerisats enthält und daß die Mischung nach Beigabe üblicher Mengen von Füllstoffen und/oder Pigmenten zum Lackpräparat verarbeitet werden.

2. Verfahren nach Anspruch 1, dadurch gekennzeichnet, daß als Copolymerisat mit etwa 20 Gewichtsprozent Polyvinyllaurylester copolymerisiertes Polyvinylacetat verwendet wird.

3. Verfahren nach Anspruch 2, dadurch gekennzeichnet, daß beide Ausgangsstoffe als 12%ige Lösung in Äthylacetat mit einigen Prozent Butylacetat angesetzt und diese Lösungen miteinander vermischt werden und daß die Füllstoffe und/oder Pigmente dieser Lösung beigegeben werden.

4. Verfahren nach den Ansprüchen 1 bis 3, dadurch gekennzeichnet, daß bei einem Molekulargewicht des PVA-Copolymerisats von etwa 100 000 das Mischungsverhältnis 72% Celluloseaceto-Monobutyrat zu 28% Cpolymerisat beträgt.

5. Verfahren nach Anspruch 4, dadurch gekennzeichnet, daß der Lösungsmischung etwa 2% bis 4% etwa Ruß und etwa 4% bis 5% Calciumcarbonat beigemischt werden.

6. Stabiler, temperaturbeständiger, mit Füllstoffen und/oder Pigmenten versehener Lack für Aufzeichnungsträger auf der Basis von Celluloseaceto-Monobutyrat und Polyvinylester, in üblicher Weise hergestellt aus dem gemäß dem Verfahren nach einem der Ansprüche 1 bis 5 hergestellten Lackpräparat.

## Revendications

1. Procédé pour la préparation d'une composition de laque contenant des charges et/ou des pigments, destinée à un support d'enregistrement, à partir de monobutyrate d'acéto-cellulose et d'esters de polyvinyle, caractérisé en ce qu'en plus du monobutyrate d'acéto-cellulose, on utilise comme produit de base un copolymère d'ester de polyvinyle dont les ramifications constituées par des chaînes linéaires aliphatiques ont une longueur minimale de 8 atomes de carbone, lesdites ramifications du copolymère sont estérifiées sur la chaîne principale à une distance supérieure à 6 atomes de carbone, en ce que les substances de base — de façon connue en soi — sont dissoutes dans un solvant organique classique, que les solvants sont ensuite mélangés les uns avec les autres pour des quantités telles que le mélange obtenu — rapporté à la somme des deux substances de base — contient 65 à 90% du butyrate et 10 à 35% du copolymère d'ester de polyvinyle, et en ce que ce mélange auquel on a ajouté des quantités classiques de charges et/ou de pigments est préparé pour former une laque.

2. Procédé selon la revendication 1, caractérisé en ce qu'on utilise comme copolymère un acétate de polyvinyle copolymérisé avec environ 20% en poids d'ester laurique de polyvinyle.

3. Procédé selon la revendication 2, caractérisé en ce qu'on ajoute les deux substances de base pour une quantité égale à 12% de la solution d'acétate d'éthyle comportant quelques pourcents d'acétate de butyle, que ces solutions sont mélangées et, que les charges et/ou pigments sont ajoutés à cette solution.

4. Procédé selon les revendication 1 à 3, caractérisé en ce que, pour un poids moléculaire du copolymère de polyvinyle d'acétate d'environ 100 000, le pourcentage des quantités, de monobutyrate d'acéto-cellulose et du copolymère choisies pour former le mélange est respectivement égale à 72 et 28.

5. Procédé selon la revendication 4, caractérisé en ce qu'on mélange au solvant une quantité comprise entre environ 2 et 4% de noir de fumée et une quantité comprise entre environ 4 et 5% de carbonate de calcium.

6. Laque stable, résistante aux températures élevées, contenant des charges et/ou des pigments, destinée à un support d'enregistrement, préparée à base de monobutyrate d'acéto-cellulose et d'ester de polyvinyle et fabriquée selon un processus classique à partir de la composition de laque obtenue selon le procédé décrit dans les revendications 1 à 5.

**Claims**

1. A process for producing a lacquer preparation containing fillers and/or pigments for record carriers on the basis of cellulose aceto monobutyrate and polyvinyl ester, characterized in that, in addition to the cellulose aceto monobutyrate as a starting material, a polyvinyl ester copolymer is used, whose side chains, made up of longer aliphatic chains, have a minimum length of eight carbon atoms, with said side chains of the copolymer having a spacing of more than six carbon atoms at the main chain being esterified, that — in a manner known per se — the starting materials are indiuvdally dissolved in a standard organic solvent, the solutions are then mixed with each other in such quantities that the mixture, relative to the total quantity of the two starting materials, contains 65 to 90 per cent by weight of the butyrate and 10 to 35 per cent by weight of the polyvinyl copolymer, and that after the usual quantities of fillers and/or pigments have been added, the mixture is processed to obtain a lacquer preparation.

2. The process according to claim 1, characterized in that the copolymer used is a polyvinyl acetate copolymerized with polyvinyl lauryl ester at about 20 per cent by weight.

3. The process according to claim 2, characterized in that the two starting materials are set as a 12 per cent solution in ethyl acetate with several per cent butyl acetate, and these solutions are mixed with each other, and that the fillers and/or pigments are added to said solution.

4. The process according to claims 1 to 3, characterized in that at a molecular weight of the PVA copolymer of about 100 000, the mixture ratio is 72 per cent cellulose aceto monobutyrate to 28 per cent copolymer.

5. The process according to claim 4, characterized in that about 2 per cent to about 4 per cent carbon black and about 4 per cent to 5 per cent calcium carbonate are added to the solution.

6. A stable, heat-resistant lacquer with fillers and/or pigments for record carriers on the basis of cellulose aceto monobutyrate and polyvinyl ester, produced in the usual manner from the lacquer preparation obtained by the process according to any one of the claims 1 to 5.